(19) Europäisches Patentamt
European Patent Office
Office européen des brevets

(11) **EP 4 433 314 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22817974.3**

(22) Anmeldetag: **15.11.2022**

(51) Internationale Patentklassifikation (IPC):
**B60G 13/14** (2006.01) **B60G 15/04** (2006.01)
**F16F 7/10** (2006.01)

(52) Gemeinsame Patentklassifikation (CPC):
**B60G 15/04; B60G 13/14; F16F 7/1022; F16F 9/20;**
B60G 2202/30; F16F 2222/08; F16F 2232/02

(86) Internationale Anmeldenummer:
**PCT/EP2022/081961**

(87) Internationale Veröffentlichungsnummer:
**WO 2023/088882 (25.05.2023 Gazette 2023/21)**

(54) **FAHRZEUG UND VERFAHREN ZUM BEREITSTELLEN EINES FAHRZEUGS UND ZUM STEUERN EINER FEDERUNGSANORDNUNG DES FAHRZEUGS**

VEHICLE AND METHOD FOR PROVIDING A VEHICLE AND FOR CONTROLLING A SUSPENSION ARRANGEMENT OF THE VEHICLE

VÉHICULE ET PROCÉDÉ POUR FOURNIR UN VÉHICULE ET POUR CONTRÔLER UN DISPOSITIF DE SUSPENSION DU VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **16.11.2021 DE 102021129863**

(43) Veröffentlichungstag der Anmeldung:
**25.09.2024 Patentblatt 2024/39**

(73) Patentinhaber: Hasse & Wrede GmbH
**12681 Berlin (DE)**

(72) Erfinder: **STEIDL, Michael**
**10318 Berlin (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
**EP-B1- 3 541 644 DE-A1- 102009 002 260**
**US-A- 3 807 678**

**Beschreibung**

Die Erfindung betrifft ein Fahrzeug gemäß dem Oberbegriff des Anspruchs 1. Die Erfindung bezieht sich auch auf Verfahren zum Bereitstellen eines Fahrzeugs und zum Steuern einer Federungsanordnung.

Federungsanordnungen, z.B. zur Abfederung eines Aufbaus bzw. Karosserie eines Fahrzeugs, insbesondere Nutzfahrzeugs, sind in unterschiedlichen Ausführungen bekannt.

Es werden z.B. zwei oder mehr Federn mit unterschiedlicher Steifigkeit parallel zueinander eingesetzt, um eine Beladung, z.B. eines Nutzfahrzeugs, zu kompensieren.

Luftfedern sind an eine Druckluftversorgung angeschlossen und können durch Variieren des Drucks der Druckluft ihre Steifigkeit ändern. So kann die Eigenfrequenz in einem kleinen Bereich bleiben, auch wenn sich eine Last stark ändert (unbeladenes Nutzfahrzeug im Gegensatz zu einem vollbeladenen).

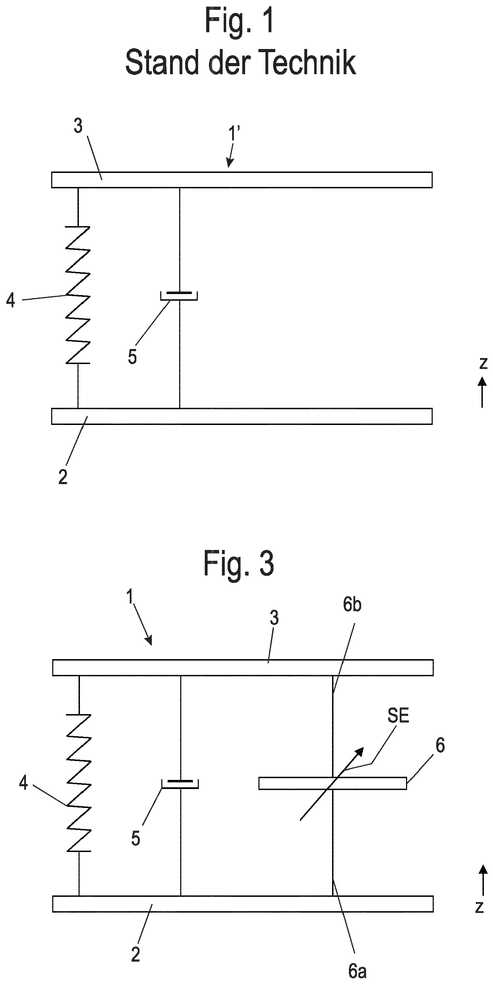

**Figur 1** zeigt eine schematische Symboldarstellung einer Federungsanordnung 1' nach dem Stand der Technik.

Die Federungsanordnung 1' dient zur Federung eines Aufbaus 3 gegenüber einer Basis 2. In dem gezeigten Beispiel ist der Aufbau 3 eine Karosserie bzw. ein Wagenkasten eines nicht gezeigten Fahrzeugs, wobei die Basis 2 eine Radaufhängung oder eine Achse des Fahrzeugs ist.

Eine Koordinate z verläuft hier senkrecht zu der Basis 2, z.B. in einer Hochachse des zugehörigen Fahrzeugs. Die Koordinate z dient zur Verdeutlichung einer Bewegungsrichtung des Aufbaus relativ zu der Basis.

Der Aufbau 3 nimmt in Abhängigkeit von einer Beladung des Aufbaus 3 unterschiedliche Positionen und somit unterschiedliche Abstände zu der Basis 2 ein. Der Aufbau 3 kann zudem in eine angehobene Position und in eine abgesenkte Position verstellt werden, z.B. für Be-/Entladevorgänge.

Die Federungsanordnung 1' umfasst mindestens eine Feder 4 und mindestens einen Dämpfer 5.

Die Feder 4 ist mit einem ersten Federende an der Basis 2 in nicht näher gezeigter Weise befestigt. Ein zweites Federende der Feder 4 ist an dem Aufbau 3 angebracht.

In gleicher Weise ist der Dämpfer 5 an der Basis 2 und an dem Aufbau 3 parallel zu der Feder 4 angebracht.

Die Feder 4 ist üblicherweise als einstellbare Feder als Druckluftfeder ausgebildet, um eine Eigenfrequenz des Aufbaus 3 bzw. der Federanordnung 1' nahezu konstant zu halten.

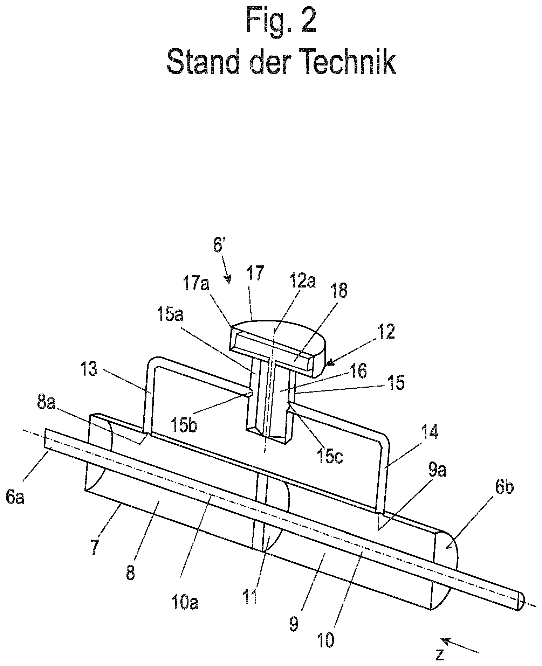

In **Figur** 2 ist eine schematische perspektivische Schnittdarstellung eines hydraulischen Inerters 6' nach dem Stand der Technik gezeigt.

Inerter sind verhältnismäßig neu entwickelte Elemente für die Optimierung von mechanischen Netzwerken. Der Inerter 6' simuliert mit Hilfe einer relativ kleinen zusätzlichen Masse eine große Massenträgheit. Die Differentialgleichung eines Inerters entspricht dem elektrotechnischen Analogon eines Kondensators.

Es wird im Folgenden ein hydraulischer Inerter 6' als Beispiel eines Inerters beschrieben. Es gibt auch andere Inertertypen, z.B. mechanische Inerter.

Eine ausführliche Beschreibung von Aufbau und Funktionsweise von Inertern kann den folgenden Schriften entnommen werden.

Inerter Nonlinearities and the Impact on Suspension Control, Fu-Cheng Wang et al., 2008 American Control Conference

und

A review of the mechanical inerter: historical context, physical realisations and nonlinear applications, David J. Wagg, published online 24. February 2021

Der hydraulische Inerter 6' umfasst einen Hydraulikzylinder 7 mit zwei Kammern 8 und 9, eine Kolbenstange 10 mit einem Kolben 11 und eine Schwungradeinrichtung 12. Die Schwungradeinrichtung 12 wird auch als "Fly Wheel" bezeichnet.

Die Kolbenstange 10 ist in Längsrichtung des Hydraulikzylinders 7 in diesem verschiebbar geführt angeordnet. Eine Längsachse 10a der Kolbenstange 10 verläuft dabei in der Längsachse des Hydraulikzylinders 7. Die Längsachse 10a verläuft zudem in Richtung der Koordinate z.

Auf der Kolbenstange 10 ist der Kolben 11 angeordnet und mit der Kolbenstange 10 fest verbunden. Der Kolben 11 teilt den Innenraum des Hydraulikzylinders 7 in die Kammern 8 und 9 auf. Die Kammern sind mit einem Fluid, z.B. eine Hydraulikflüssigkeit, gefüllt.

Jede Kammer 8, 9 weist jeweils eine Ein-/Auslassöffnung 8a, 9a auf. Die Ein-/Auslassöffnung 8a der ersten Kammer 8 ist mit einem ersten Ende einer ersten Fluidleitung 13 verbunden, die mit der ersten Kammer 8 kommuniziert. In ähnlicher Weise ist so die Ein-/Auslassöffnung 9a der zweiten Kammer 9 mit einem ersten Ende einer zweiten Fluidleitung 14 verbunden, die mit der zweiten Kammer 9 kommuniziert.

Die beiden Fluidleitungen 13, 14 sind mit ihren jeweiligen zweiten Ende mit der Schwungradeinrichtung 12 verbunden, was unten noch näher erläutert wird.

Die Schwungradeinrichtung 12 umfasst ein Antriebsgehäuse 15 mit einer Antriebskammer 15a, ein Schwungradgehäuse 17 mit einer Kammer 17a und ein Schwungrad 18.

Die Antriebskammer 15a ist mit zwei Ein-/Auslassöffnungen 15b, 15c versehen. Die erste Ein-/Auslassöffnung 15b ist mit dem zweiten Ende der ersten Fluidleitung 13 verbunden. An der zweiten Ein-/Auslassöffnung 15c ist das zweite Ende der zweiten Fluidleitung 14 angeschlossen. Auf diese Weise kommunizieren die Fluidleitungen 13, 14 mit der Antriebskammer 15a des Antriebsgehäuses 15 der Schwungradeinrichtung 12.

In der Antriebskammer 15a ist ein Flügelrad 16 um eine Drehachse 12a der Schwungradeinrichtung 12 drehbar gelagert angeordnet. Die Drehachse 12a verläuft in dem gezeigten Beispiel rechtwinklig zu der Längsachse 10a der Kolbenstange 10 und somit des Hydraulikzylinders 7.

Die Antriebskammer 15 ist an ihrer Unterseite durch einen Boden verschlossen. Die Oberseite der Antriebskammer 15 ist durch das Schwungradgehäuse 17 verschlossen. In der Kammer 17a des Schwungradgehäuses 17 ist das Schwungrad 18 drehbar um die Drehachse 12a gelagert angeordnet.

Das Schwungrad 18 ist hier eine kreiszylindrische Scheibe mit einem bestimmten Gewicht und Trägheitsmoment, z.B. metallisch.

Das Schwungrad 18 ist mit dem Flügelrad 16 drehfest über eine Verbindung (nicht gezeigt) verbunden, welche durch die Oberseite des Antriebsgehäuses 15 und die Unterseite des Schwungradgehäuses 17 verläuft. Die Antriebskammer 15a und die Kammer 17a des Schwungradgehäuses 17 können gegeneinander abgedichtet sein oder miteinander kommunizieren.

Der Inerter 6' ist mit Inerterbefestigungen 6a, 6b versehen. Diese sind nur mit Bezugslinien angedeutet. Eine erste Inerterbefestigung 6a befindet sich beispielsweise an der Kolbenstange 10, die zweite Inerterbefestigung 6b ist dann am Hydraulikzylinder 7 angebracht.

Die Funktionsweise des hydraulischen Inerters 6'ist so, dass einer relativen Beschleunigung zwischen zwei Anschlusspunkten (z.B. das Rad bzw. die Achse an der Inerterbefestigung 6a, wobei der andere Anschlusspunkt der Inerterbefestigung 6b der gefederte Aufbau 3 ist) ein Widerstand entgegengesetzt wird.

Der Widerstand wird durch das Schwungrad 18 dargestellt, welches durch Verdrängung von Hydraulikflüssigkeit in Bewegung gesetzt werden muss. Dies erfolgt hier mittels des Flügelrads 16, welches in Serie mit den Fluidleitungen 13, 14 zwischen diesen angeordnet ist. Wenn die Kolbenstange 10 mit dem Kolben 11 relativ zu dem Hydraulikzylinder 7 in Richtung der z-Achse (in Figur 2 nach links) verschoben wird, komprimiert der Kolben 11 die Hydraulikflüssigkeit in der ersten Kammer 8 des Hydraulikzylinders 7 und erzeugt gleichzeitig in der zweiten Kammer 9 des Hydraulikzylinders 7 einen Unterdruck. Die Hydraulikflüssigkeit strömt aus der ersten Kammer 8 durch die erste Fluidleitung 13 in die Antriebskammer 15a des Antriebsgehäuses 15 der Schwungradeinrichtung 12 und aus der Antriebskammer 15a heraus in die zweite Fluidleitung 14. Aus der zweiten Fluidleitung 14 strömt die Hydraulikflüssigkeit weiter in die zweite Kammer 9 des Hydraulikzylinders 7.

Dabei wird das Flügelrad 16 in der Antriebskammer 15a der Schwungradeinrichtung 12 durch die Strömung der Hydraulikflüssigkeit gedreht. Das Flügelrad 16 überträgt seine Drehung auf das Schwungrad 18.

Durch die Trägheit des Schwungrads 18 sowie durch das Verhältnis zwischen zu verdrängender Hydraulikflüssigkeit und der Drehzahl des Schwungrads 18 ist ein Strömungswiderstand gebildet, welcher der Strömung der Hydraulikflüssigkeit des Inerters 6' entgegen steht.

Die Differentialgleichung ist $F=b*(\ddot{x}_1)-\ddot{x}_2)$. Durch die Trägheit des Schwungrads 18 sowie durch das Verhältnis zwischen zu verdrängendem Fluid und Drehzahl des Schwungrads 18 kann der Widerstand (die Konstante b der Differentialgleichung) eingestellt werden. Generell ist ein solches System z.B. bereits erfolgreich in Formel-1 Fahrzeugen eingesetzt worden.

Dokument DE 34 42 622 C2 illustriert ein Beispiel einer Luftfedervorrichtung.

Dokument US 2009 / 0 139 225 A1 beschreibt einen hydraulischen Inertermechanismus.

Dokument DE 10 2009 002260 A1 offenbart ein Fahrzeug gemäß dem Oberbegriff des Anspruchs 1.

Die vorgeschlagenen Lösungen haben sich eigentlich bewährt. Es besteht aber ein ständiger Bedarf an verbesserten Federanordnungen.

Daher ist es die Aufgabe, eine verbesserte Federanordnung bereitzustellen.

Eine weitere Aufgabe besteht darin, ein verbessertes Verfahren zum Steuern einer Federanordnung zu schaffen.

Die Aufgabe wird durch den Gegenstand des Anspruchs 1 gelöst.

Das Verfahren nach Anspruch 11 löst die weitere Aufgabe.

Eine Idee der Erfindung ist es, bei einer Federanordnung eine Luftfeder durch eine konventionelle (nicht in der Steifigkeit anpassbare) Feder zu ersetzen, indem ein zuschaltbarer Inerter parallel zu der konventionellen Feder installiert wird.

Ein erfindungsgemäßes Fahrzeug, insbesondere Nutzfahrzeug, mit einer Federungsanordnung für das Fahrzeug, mit einer Basis und einem Aufbau, wobei die Federungsanordnung mindestens eine Feder, mindestens einen Dämpfer und mindestens einen Inerter umfasst, wobei die mindestens eine erste Feder, der mindestens eine Dämpfer und der mindestens eine Inerter einerseits jeweils mit dem Aufbau und andererseits mit der Basis verbunden sind, wird bereitgestellt, wobei der mindestens eine Inerter eine Stelleinrichtung aufweist.

Ein Vorteil der Erfindung besteht darin, dass keine mit Druckluft einstellbare Luftfeder benötigt wird. Somit kann auch auf Druckluftzufuhr verzichtet werden. Im Besonderen bei elektrisch fahrenden Fahrzeugen und/oder bei Fahrzeugen, die elektromechanisch bremsen, kann so auf eine Druckluftbereitstellung (Kompressor) verzichtet werden. Hierdurch können Kosten eingespart werden, zusätzlich ist die Druckluft sehr ineffizient bezüglich des Energieverbrauchs.

Mittels der Stelleinrichtung ist der Inerter ein schaltbarer bzw. steuerbarer Inerter, mit dem eine Anpassung an unterschiedliche Beladungszustände einfach möglich ist.

Ein erfindungsgemäßes Verfahren zum Bereitstellen eines Fahrzeugs, insbesondere Nutzfahrzeugs, und zum Steuern einer Federungsanordnung für das Fahrzeug, mit einer Basis und einem Aufbau, wobei die Federungsanordnung mindestens eine Feder, mindestens einen Dämpfer und mindestens einen Inerter umfasst, wobei die mindestens eine Feder, der mindestens eine Dämpfer und der mindestens eine Inerter einerseits jeweils mit dem Aufbau und andererseits mit der Basis verbunden sind, wird bereitgestellt. Das Verfahren umfasst die Verfahrensschritte: VS1) Bereitstellen der Federanordnung mit mindestens einer Feder, mindestens einem Dämpfer und mindestens einem hydraulischen Inerter mit mindestens einer Schwungradeinrichtung mit einer Stelleinrichtung, wobei sich der Inerter in einem ersten Betriebszustand mit einer ersten Massenträgheit befindet, die an einen leeren Ladezustand des Fahrzeugs angepasst ist; VS2) Verstellen des Inerters mittels der Stelleinrichtung in einen zweiten Betriebszustand mit einer zweiten Massenträgheit, welche an eine Teilbeladung des Fahrzeugs angepasst ist; und VS3) Verstellen des Inerters mittels der Stelleinrichtung in einen dritten Betriebszustand mit einer dritten Massenträgheit, die an einen vollbeladenen Zustand des Fahrzeugs angepasst ist.

Die Federanordnung benötigt vorteilhafterweise keinen Druckluftanschluss mehr. Die Anpassungseinstellung an die Beladungszustände erfolgt durch den schaltbaren bzw. steuerbaren Inerter. Hierdurch kann ein optimaler Betriebszustand der Federanordnung erreicht werden.

Vorteilhafte Weiterbildungen der Erfindung sind durch die Unteransprüche angegeben.

In einer Ausführung ist in einer ersten Stellung der Stelleinrichtung ein erster Betriebszustand des Inerters eingestellt, in welchem der Inerter eine erste Massenträgheit aufweist, wobei in einer zweiten Stellung der Stelleinrichtung ein zweiter Betriebszustand des Inerters eingestellt ist, in welchem der Inerter eine zweite Massenträgheit aufweist, die sich von der ersten Massenträgheit unterscheidet. Dies ist vorteilhaft, da der Inerter auf einfache Weise schaltbar bzw. verstellbar ist.

In einer weiteren Ausführung weist die Stelleinrichtung mehr als zwei Stellungen auf, welche mehr als zwei Betriebszuständen des Inerters mit unterschiedlichen Massenträgheiten entsprechen. Damit ist eine vorteilhafte Erweiterung des Einsatzbereiches ermöglicht.

Es ist zudem in einer noch weiteren Ausführung für eine weitere vorteilhafte Vergrößerung des Einsatzbereiches vorgesehen, dass die Stelleinrichtung zwischen zwei Stellungen stufenweise Zwischenstellungen oder eine stufenlose Verstellung aufweist.

Erfindungsgemäß ist der mindestens eine Inerter ein hydraulischer Inerter mit mindestens einer Schwungradeinrichtung. Dieser Aufbau ist vorteilhaft kompakt.

Es ist weiterhin dabei vorgesehen, dass die Stelleinrichtung mindestens einen Bypass mit einem Stellorgan aufweist, wobei der mindestens eine Bypass die mindestens eine Schwungradeinrichtung in einer Stellung des Stellorgans überbrückt und in einer anderen Stellung des Stellorgans verschlossen ist. Ein solches Stellorgan kann z.B. eine einstellbare Drossel oder ein Magnetventil sein. Dies ist vorteilhaft, da es handelsübliche Bauteile mit hoher Qualität sind.

Wenn das Stellorgan des mindestens einen Bypasses einen geschlossenen Zustand und einen offenen Zustand aufweist oder einen stufenweisen oder stufenlosen Übergang von dem geschlossenen Zustand in den offenen Zustand und zurück aufweist, ergibt sich der Vorteil einer Einstellbarkeit mit vielen Stellungen.

Eine andere Ausführung sieht vor, dass der Inerter mindestens einen Elektromotor als Stelleinrichtung aufweist, welcher mit einem Schwungrad der mindestens einen Schwungradeinrichtung direkt oder indirekt gekoppelt ist. Hierbei ergibt sich die vorteilhafte Möglichkeit, die Eigenfrequenz des Aufbaus nahezu konstant zu halten unter Verwendung einer nicht-einstellbaren Feder.

Erfindungsgemäß weist der Inerter mindestens eine Schwungradeinrichtung mit einem Schwungrad mit einem variablen Trägheitsmoment auf, welches die Stelleinrichtung bildet. Dieser Aufbau ist vorteilhaft kompakt.

Hierzu weist ein passender Stellmechanismus verstellbare Massenelemente auf oder/und kann diese in dem Schwungrad verstellen. Ein solcher Stellmechanismus kann z.B. ein Hebelgetriebe mit einem Motor oder Elektromagnetantrieb sein.

Der mindestens eine Inerter ist parallel zu der mindestens einen Feder und zu dem mindestens einen Dämpfer angeordnet. Dies ergibt den Vorteil eines kompakten und platzsparenden Aufbaus.

Eine weitere Ausführung sieht vor, dass der mindestens eine Inerter die Funktion des mindestens einen Dämpfers integriert aufweist. Damit kann der mindestens eine Dämpfer der Federanordnung vorteilhaft eingespart werden.

Eine zusätzliche Ausführung beinhaltet Kombinationen mit weiteren Elementen aus mechanischen Netzwerken, die geeignet sind, die Isolationswirkung zu steigern, z.B. Tuned-Mass-Absorber oder über negative Steifigkeiten angekoppelte Tuned-mass-absorber (bekannt als K-Damper-Konzept).

In einer weiteren vorteilhaften Ausführung ist die mindestens eine Feder eine nicht einstellbare Feder. Somit kann ein kostengünstiges Bauteil hoher Qualität verwendet werden.

Eine weitere Ausführung des Verfahrens sieht vor, dass das Verstellen des Inerters mittels der Stelleinrichtung von einem Betriebszustand in einen anderen in Stufen oder/und stufenlos durchgeführt wird. Dies ist vorteilhaft, da auf diese Weise eine feinere Anpassung möglich wird.

Es ist vorteilhaft, wenn das Verstellen des Inerters mittels der Stelleinrichtung in Form eines Elektromotors, der mit einer Schwungradeinrichtung des Inerters gekoppelt ist, erfolgt. Ein Elektromotor ist vorteilhaft einfach anzusteuern und in hoher Qualität kostengünstiger erhältlich.

Ein weiterer Vorteil ergibt sich in einer Ausführung, die vorsieht, dass der mit der Schwungradeinrichtung des Inerters gekoppelte Elektromotor zusätzlich ein Levelling der Federanordnung durchführen kann. Dies ist besonders vorteilhaft zur Höheneinstellung bei der Be-/Entladung an einer Rampe, da diese Funktion des Levelling mit integriert sein kann.

In einer noch weiteren Ausführung des Verfahrens ist es weiterhin vorteilhaft, wenn der mit der Schwungradeinrichtung des Inerters in einen Generatorbetrieb geschaltet wird und somit auch gleichzeitig zum Bedämpfen des Schwungrads für eine Rekuperation von elektrischer Energie, ein Energy Harvesting und/oder eine optimale Einstellung der Dämpfung der Federanordnung benutzt werden kann.

Es ist in einer anderen Ausführung des Verfahrens zudem vorteilhaft, wenn das Verstellen des Inerters durch Verändern eines Trägheitsmomentes des Schwungrads der mindestens einen Schwungradeinrichtung mittels der Stelleinrichtung erfolgt.

Ein besonderer Vorteil der Erfindung besteht darin, dass durch die Verwendung des zuschaltbaren bzw. steuerbaren Inerters eine nahezu konstante Eigenfrequenz des Aufbaus für den beladenen und den unbeladenen Zustand eines zugehörigen Fahrzeugs realisiert werden kann.

Ausführungsbeispiele der Erfindung werden nachfolgend anhand der beigefügten Zeichnungen beschrieben. Diese Ausführungsbeispiele dienen lediglich der Veranschaulichung der Erfindung anhand bevorzugter Konstruktionen, welche aber die Erfindung nicht abschließend darstellen. Es sind insofern im Rahmen der Ansprüche auch andere Ausführungsbeispiele sowie Modifikationen und Äquivalente der dargestellten Ausführungsbeispiele realisierbar.

Es zeigen:

Figur 1      eine schematische Symboldarstellung einer Federungsanordnung nach dem Stand der Technik;

Figur 2      eine schematische perspektivische Schnittdarstellung eines hydraulischen Inerters nach dem Stand der Technik;

Figur 3      eine schematische Blockdarstellung einer erfindungsgemäßen Federungsanordnung;

Figur 4      eine schematische perspektivische Schnittdarstellung eines nicht erfindungsgemäßen Beispiels eines hydraulischen Inerters;

Figur 5-6      schematische perspektivische Schnittdarstellungen eines nicht erfindungsgemäßen Beispiels eines Inerters in der Figur 5 und eines erfindungsgemäßen Inerter in der Abbildung 6;

Figur 7-8      graphische Darstellungen von Übertragungsfunktionen und Eigenfrequenzen der erfindungsgemäßen Federanordnung; und

Figur 9      ein schematisches Flussdiagramm eines erfindungsgemäßen Verfahrens.

Die Begriffe "unten", "oben", "links", "rechts", "Unterseite", "Oberseite" beziehen sich auf die Anordnungen in den Figuren.

**Figuren 1 und 2** sind oben bereits beschrieben.

**Figur 3** zeigt eine schematische Blockdarstellung eines Ausführungsbeispiels einer erfindungsgemäßen Federungsanordnung 1.

Die erfindungsgemäße Federungsanordnung 1 umfasst die mindestens eine Feder 4, den mindestens einen Dämpfer 5 und zusätzlich einen Inerter 6 mit einer Stelleinrichtung SE.

Der Inerter 6 ist in diesem Beispiel ein hydraulischer Inerter 6. Der Inerter 6 ist parallel zu der mindestens einen Feder 4 und dem mindestens einen Dämpfer 5 angeordnet. Dabei ist die erste Inerterbefestigung 6a an der Kolbenstange 10 mit der Basis verbunden, wobei die zweite Inerterbefestigung 6b am Hydraulikzylinder 7 mit dem Aufbau 3 verbunden ist.

Der hydraulische Inerter 6 ist mittels der Stelleinrichtung SE aus einer Funktionsstellung in eine Passivstellung schaltbar bzw. einstellbar. Mit anderen Worten, der Inerter 6 kann der Feder 4 und dem Dämpfer 5 zugeschaltet bzw. abgeschaltet werden.

Zudem kann der Inerter 6 mittels der Stelleinrichtung SE in Zwischenstufen eingestellt werden, die auf verschiedene Art und Weise realisiert werden können. Dies wird unten weiter noch im Detail beschrieben.

Durch diese Schaltmöglichkeit kann mittels der Stelleinrichtung SE die Eigenfrequenz des Aufbaus mit der Federanordnung 1 nahezu konstant gehalten werden, wobei die Feder 4 eine nicht-einstellbare Feder sein kann.

Auf diese Weise kann mit dem einstellbaren Inerter 6 virtuell die Masse des Aufbaus mit der Federanordnung 1 erhöht bzw. die Eigenfrequenz eingestellt werden.

Alle Inertertypen können zur Anwendung kommen. In den gezeigten Beispielen ist der hydraulische Inerter 6 eingesetzt.

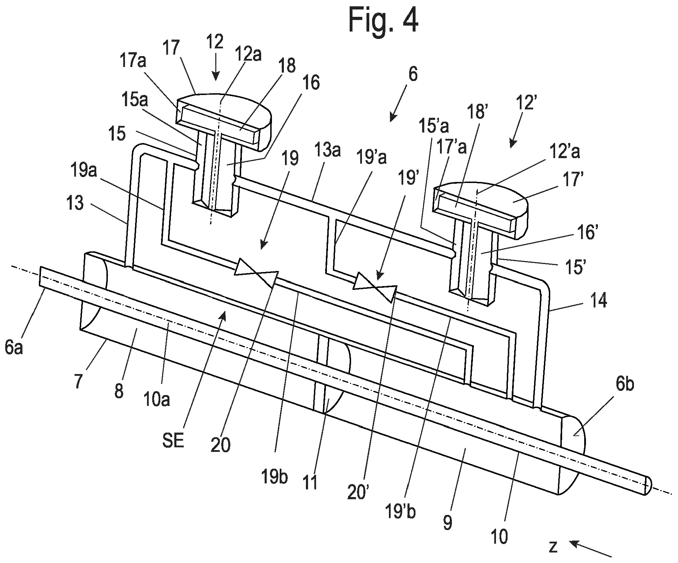

In **Figur 4** ist eine schematische perspektivische Schnittdarstellung eines ersten nicht erfindungsgemäßen Beispiels eines hydraulischen Inerters 6 gezeigt.

Der Inerter 6 ist ein schaltbarer bzw. steuerbarer Inerter 6 und weist in dem gezeigten Beispiel zwei Schwungradeinrichtungen 12, 12' und eine Stelleinrichtung SE auf.

Die Schwungradeinrichtungen 12, 12' sind in Reihe angeordnet und über Fluidleitungen 13a, 13b untereinander verbunden.

Die erste Schwungradeinrichtung 12 ist durch einen ersten Bypass 19 überbrückt, und die zweite Schwungradeinrichtung 12' ist durch einen zweiten Bypass 19' überbrückt.

Der erste Bypass 19 ist mit einer ersten Bypassleitung 19a an die erste Fluidleitung 13 vor der ersten Schwungradeinrichtung 12 angeschlossen. Die erste Bypassleitung 19a ist über ein Stellorgan 20 mit einer zweiten Bypassleitung 19b verbunden. Die zweite Bypassleitung 19b kommuniziert mit der zweiten Kammer 9 des Hydraulikzylinders 7.

Der zweite Bypass 19' ist mit einer ersten Bypassleitung 19'a an Fluidleitungen 13a und 13b vor der zweiten Schwungradeinrichtung 12' angeschlossen. Die erste Bypassleitung 19'a ist über ein Stellorgan 20' mit einer zweiten Bypassleitung 19'b verbunden. Die zweite Bypassleitung 19'b kommuniziert ebenfalls wie die zweite Bypassleitung 19b mit der zweiten Kammer 9 des Hydraulikzylinders 7.

Der erste Bypass 19 mit dem Stellorgan 20 und der zweite Bypass 19' mit dem Stellorgan 20' bilden die Stelleinrichtung SE des Inerters 6.

Die Stellorgane 20, 20' sind in einer Ausführung einfache Ventile mit jeweils einer geschlossenen und einer geöffneten Stellung. In einer anderen Ausführung können die Stellorgane 20, 20' mehrere Stufen aufweisen oder stufenlos einstellbar sein. Die Stellorgane 20, 20' werden elektrisch betätigt, z.B. als Magnetventile, motorische Stellventile o.dgl.

Die Stellorgane 20, 20' können auch als einstellbare Drosseln ausgebildet sein.

Die Betätigung der Stellorgane 20, 20' bzw. der Stelleinrichtungen SE, SE' kann mittels einer Steuereinheit, die hier nicht dargestellt ist, oder/und manuell erfolgen.

Der schaltbare Inerter 6 kann drei Betriebszustände einnehmen.

In dem ersten Betriebszustand sind die beiden Schwungradeinrichtungen 12, 12' durch die geöffneten Bypässe 19, 19' (offene Stellorgane 20, 20') überbrückt. Die Strömung der Hydraulikflüssigkeit in der ersten Fluidleitung 13 wird dabei ohne den Widerstand der ersten Schwungradeinrichtung 12 durch den ersten Bypass 19 in die zweite Kammer 9 des Hydraulikzylinders 7 geleitet. In dem ersten Betriebszustand weist der Inerter 6 eine erste Massenträgheit auf.

Der zweite Betriebszustand, in welchem der Inerter 6 eine zweite Massenträgheit aufweist, wird dadurch eingestellt, dass nur das Stellorgan 20' des zweiten Bypasses 19' geöffnet ist. Dabei ist nur die zweite Schwungradeinrichtung 12' überbrückt. Die erste Schwungradeinrichtung 12 wirkt dann mit ihrem Widerstand auf die Strömung der Hydraulikflüssigkeit ein.

Und in dem dritten Betriebszustand sind die Stellorgane 20, 20' der beiden Bypässe 19, 19' geschlossen, wobei beide Schwungradeinrichtungen 12, 12' wirken, indem sich ihre beiden Widerstände hintereinander, d.h. in Reihe bzw. in Serie geschaltet, addieren. In diesem dritten Betriebszustand weist der Inerter 6 eine dritte Massenträgheit auf.

Die erste, zweite und dritte Massenträgheit unterscheiden sich untereinander.

In einer nicht dargestellten, aber leicht vorstellbaren Variante kann z.B. nur eine Schwungradeinrichtung 12, 12' mit einem Bypass 19, 19' vorhanden sein. Es ist auch möglich, dass beide Schwungradeinrichtungen 12, 12' mit nur einer durch einen Bypass 19, 19' überbrückten Schwungradeinrichtung 12, 12' vorgesehen sind.

Natürlich ist auch eine andere Variante mit mehr als zwei Schwungradeinrichtung 12, 12' mit zugehörigen oder weniger Bypässen 19, 19' denkbar.

Wenn die Stellorgane 20, 20' mehrere Stufen besitzen oder stufenlos einstellbar sind, ist eine besonders vielfältige Einstellung des Inerters 6 aufgrund der auf diese Weise variablen Strömungswiderstände möglich.

So kann durch Abschalten bzw. teilweises Zuschalten des Inerters 6 eine Eigenfrequenz des Aufbaus 3 bzw. der Federanordnung 1 passend auf Beladungszustände eingestellt werden. So z.B. auch zwei Inerter 6, die jeweils per Bypass 19, 19' ab- oder zugeschaltet werden können

Eine Einstellung der Dämpfung ist somit möglich über teilweise Ab- und Zuschaltung der Bypässe (Drosseln) oder über den Spalt zwischen dem Schwungrad 18 und dem Schwungradgehäuse 17 bei innenliegendem Schwungrad 18 in der Kammer 17a des Schwungradgehäuses 17.

Eine Dämpferfunktion kann ganz oder teilweise durch den Inerter 6 generiert werden. Damit ist eine Integration des Dämpfers 5 in den Inerter 6 möglich.

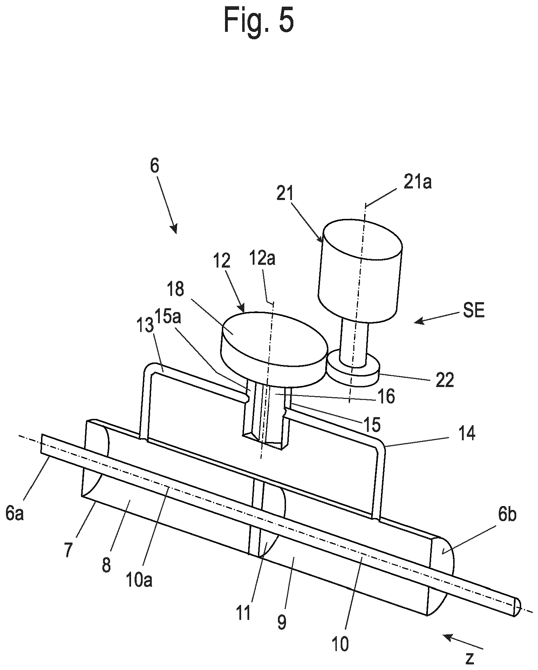

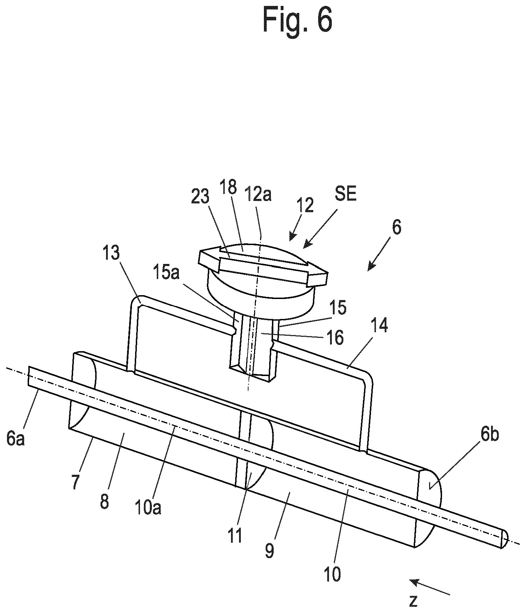

**Figur 5 und** 6 stellen schematische perspektivische Schnittdarstellungen von Varianten des erfindungsgemäßen Inerters 6 dar.

Bei der nicht erfindungsgemäßen Variante des Inerters 6 in Figur 5 ist das Schwungrad 18 der Schwungradeinrichtung 12 außen positioniert. Damit kann die Trägheit des Inerters 6 durch einfaches Auswechseln des Schwungrades 18 in gewissen Grenzen geändert werden.

Mittels eines Elektromotors 21 kann der Inerter 6 als ein "aktiver" Inerter 6 eingesetzt werden. Hierbei wird auf der Seite des Schwungrads 18 über den Elektromotor 21 mittels eines Motorritzels 22 eingegriffen. Dabei steht das Motorritzel 22 mit dem Schwungrad 18 direkt oder indirekt beispielsweise über ein Getriebe in Eingriff. Motorritzel 22 und Schwungrad 18 haben dabei korrespondierende Verzahnungen. Der Elektromotor 21 bildet hier die Stelleinrichtung SE zusammen mit einer nicht gezeigten Steuereinheit.

Das Getriebe ist idealerweise mit sehr hoher Untersetzung ausgebildet, wenn der Elektromotor 21 im Vergleich zum Schwungrad 18 eine hohe Drehzahl hat. Andererseits kann der Elektromotor 21 zusammen mit seiner Steuereinheit auch für geringe Drehzahlen ausgelegt sein.

Der Elektromotor 21 kann auch für ein so genanntes Levelling, d.h. Höhenverstellung von Aufbau 3 relativ zur Basis 2, das mit dem Schwungrad 18 drehfest verbundene Flügelrad als Pumpenrad verwenden und dadurch das Levelling generieren. Dabei wird eine Verstellung zwischen Kolbenstange 10 und Hydraulikzylinder 7 in z-Richtung oder in gegengesetzter z-Richtung bewirkt.

Wenn eine gewünschte Höhe eingestellt ist, wird der Elektromotor 21 ausgeschaltet. Die Kopplung des Elektromotors 21 mit dem Schwungrad 18, z.B. ein Getriebe, ist dabei selbsthemmend ausgebildet, um ein selbsttätiges Rückstellen unter Belastung zu verhindern. Dies kann aber auch mittels eines schaltbaren Ventils in den Fluidleitungen 13, 14 verhindert werden.

Für weitere Anpassungen des Inerters 6 an die Einbausituation zwischen Aufbau 3 und Basis 2 können zwischen Kolbenstange 10 und Basis 2 bzw. Hydraulikzylinder 7 und Aufbau 3 passende Verlängerungen und/oder Verstellgetriebe eingefügt werden.

Eine weitere Funktion ist möglich, wenn dieser Elektromotor 21 in einen Generatorbetrieb geschaltet wird (durch die Steuereinheit) und somit auch gleichzeitig zum Bedämpfen des Schwungrads 18 (Rekuperation von elektrischer Energie, 'Energy Harvesting', optimale Einstellung der Dämpfung des Systems) verwendet wird.

Kombination mit integrierten Varianten zum Levelling sind möglich, z.B. mit Getriebe, Hebevorrichtung, K-Damper.

Figur 6 zeigt eine erfindungsgemäße Variante des Inerters 6, bei welcher die Schwungradeinrichtung 12 ein Schwungrad 18 mit einem variablen Trägheitsmoment aufweist. Hierzu kann ein passender Stellmechanismus 23 zum Einsatz kommen. Dies ist durch den Doppelpfeil angedeutet. Der Stellmechanismus 23 kann z.B. radial verstellbare Massenelemente aufweisen. Dabei ist das Schwungrad 18 außen angeordnet. Es ist aber auch möglich, dass das Schwungrad 18 mit dem Stellmechanismus 23 innerhalb des Schwungradgehäuses 17 angeordnet ist, wobei der Stellmechanismus 23 von außen, z.B. mit einem geeignetem Hebelgetriebe, verstellbar ist.

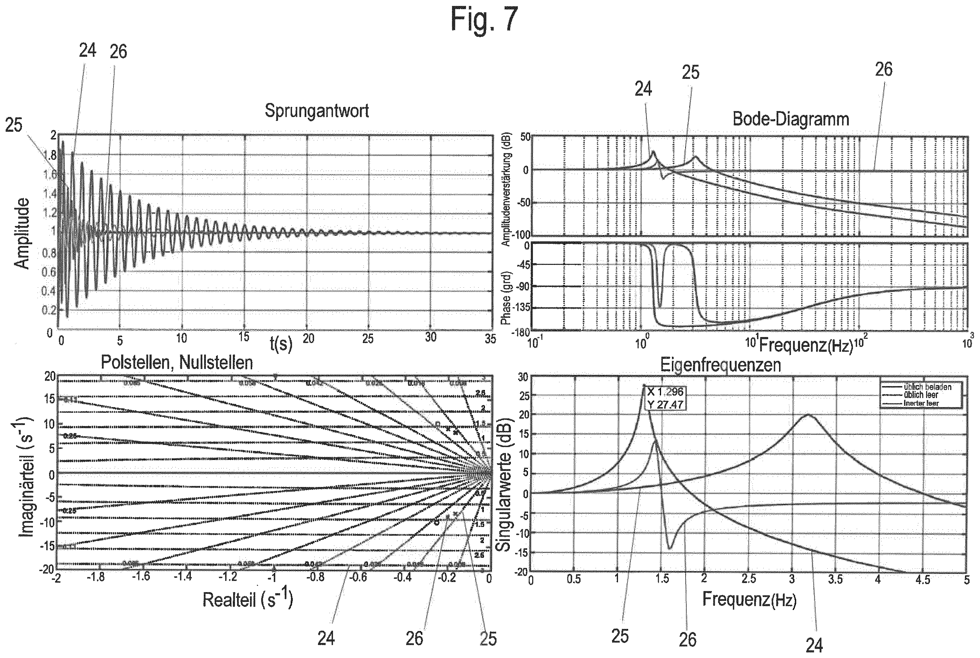

In **Figur** 7 sind graphische Darstellungen von Übertragungsfunktionen und Eigenfrequenzen der erfindungsgemäßen Federanordnung 1 gezeigt.

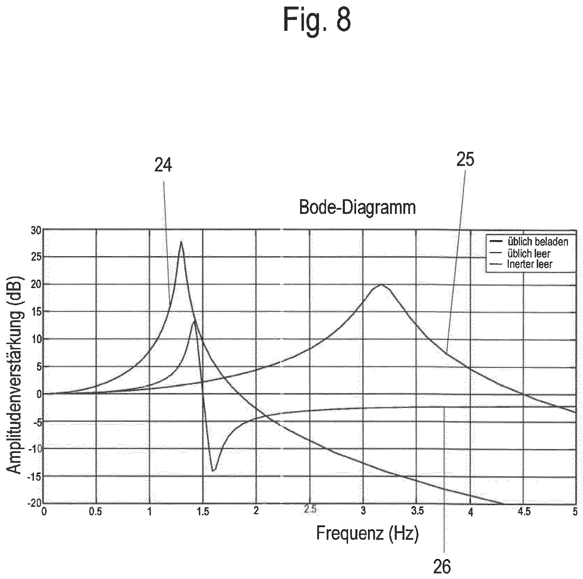

**Figur** 8 zeigt die Eigenfrequenzen in vergrößerter Darstellung.

Es sind drei Graphen 24, 25, 26 als Sprungantwort, Bode Diagramm, Pol-Nullstellendiagramm und Eigenfrequenz angegeben

Der Graph 24 entspricht einem üblichen Beladungszustand des Aufbaus 3 bzw. der Federanordnung 1' (Figur 1). Mit dem Graph 25 ist ein leerer Beladungszustand aufgetragen, wobei der Graph 26 den leeren Beladungszustand mit einem zugeschalteten Inerter 6 verdeutlicht.

Man erkennt, dass die Eigenfrequenz für den konventionellen Aufbau 3 eines Nutzfahrzeugs beladen bei ca. 1.2 Hz liegt, leer bei über 3 Hz. Mit Hilfe des zugeschalteten Inerters 6 kann die Eigenfrequenz für das leere Nutzfahrzeug wieder in den Bereich des beladenen Nutzfahrzeugs geholt werden. Generell sind je nach Beladungszustand und nach Schaltmöglichkeit des Inerters 6 Eigenfrequenzen im Bereich zwischen 1 Hz und 2 Hz realisierbar, so dass auch mit einer konstanten Federrate eine Eigenfrequenz im Zielbereich realisierbar ist.

Die Übertragungsfunktion mit Inerter 6 ist:

$$xT=(s^2b+s*d+c)/(s^2*(mT+b)+s*d+c)*u$$

Durch die Variable b kann die Eigenfrequenz in Abhängigkeit der Beladung (Masse mT) eingestellt werden.

Die Übertragungsfunktion ohne Inerter 6 (b=0) ist:

$$xT=(s*d+c)/(s^2*(mT)+s*d+c)*u$$

Es sind zudem Kombinationen mit weiteren Maßnahmen zur Beeinflussung der Übertragungsfunktion möglich, wie beispielsweise K-Damper oder TMA (Tuned Mass Absorber).

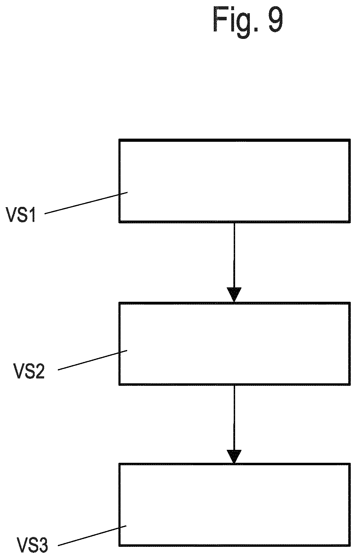

**Figur** 9 stellt ein schematisches Flussdiagramm eines erfindungsgemäßen Verfahrens zum Steuern der Federungsanordnung 1 nach Figur 3 im Zusammenhang mit den Figuren 4 bis 6 dar.

In einem ersten Verfahrensschritt VS1 wird die Federanordnung 1 mit einer Feder 4, einem Dämpfer 5 und einem schaltbaren Inerter 6 mittels der Stelleinrichtung SE bereitgestellt. Der Inerter 6 befindet sich dabei in einem ersten Betriebszustand mit einer ersten Massenträgheit, die an einen leeren Ladezustand eines zugehörigen Fahrzeugs angepasst ist.

Der Inerter 6 wird in einem zweiten Verfahrensschritt VS2 in einen zweiten Betriebszustand mit einer zweiten Massenträgheit, welche an eine Teilbeladung des zugehörigen Fahrzeugs angepasst ist, mittels der Stelleinrichtung SE verstellt.

In einem dritten Verfahrensschritt VS 3 wird der Inerter 6 mit der Stelleinrichtung SE in einen dritten Betriebszustand mit einer dritten Massenträgheit verstellt, die an einen vollbeladenen Zustand des zugehörigen Fahrzeugs angepasst ist.

Das Verstellen von einem Betriebszustand des Inerters 6 in einen anderen wird in Stufen oder/und stufenlos durchgeführt.

In einem weiteren Betriebszustand des Inerters 6 wird ein Levelling der Federanordnung 1 mit einem Elektromotor 21 vorgenommen, der mit einer Schwungradeinrichtung 12 des Inerters 6 gekoppelt ist.

Der Elektromotor 21 wird in einem noch weiteren Betriebszustand des schaltbaren Inerters 6 als Generator verwendet.

Das Verstellen bzw. Schalten des Inerters 6 kann auch durch das Verändern eines Trägheitsmomentes des Schwungrads 18 der Schwungradeinrichtung 12, 12' vorgenommen werden.

Die Erfindung ist durch die oben beschriebenen Ausführungsbeispiele nicht eingeschränkt, sondern im Rahmen der Ansprüche modifizierbar.

Bezugszeichenliste

| | |
|---|---|
| 1, 1' | Federungsanordnung |
| 2 | Basis |
| 3 | Aufbau |
| 4 | Feder |
| 5 | Dämpfer |
| 6, 6' | Inerter |
| 6a, 6b | Inerterbefestigung |
| 7 | Hydraulikzylinder |
| 8, 9 | Kammer |
| 8a, 9a | Ein-/Auslassöffnung |
| 10 | Kolbenstange |
| 10a | Längsachse |
| 11 | Kolben |
| 12 | Schwungradeinrichtung |
| 12a | Drehachse |
| 13, 13a; 14 | Fluidleitung |
| 15, 15' | Antriebsgehäuse |
| 15a, 15'a | Antriebskammer |
| 15b, 15'b, 15c, 15'c | Ein-/Auslassöffnung |
| 16, 16' | Flügelrad |
| 17, 17' | Schwungradgehäuse |
| 17a, 17'a | Kammer |
| 18, 18' | Schwungrad |
| 19, 19' | Bypass |
| 19a, 19b; 19'a, 19'b | Bypassleitung |
| 20, 20' | Stellorgan |

| 21 | Elektromotor |
| 21a | Motorachse |
| 22 | Motorritzel |
| 23 | Stellmechanismus |
| 24, 25, 26 | Graph |

| SE | Stelleinrichtung |
| VS1-3 | Verfahrensschritt |
| z | Koordinate |

**Patentansprüche**

1. Fahrzeug, insbesondere Nutzfahrzeug, mit einer Federungsanordnung (1, 1') für das Fahrzeug, einer Basis (2) und einem Aufbau (3), wobei die Federungsanordnung (1) mindestens eine Feder (4), mindestens einen Dämpfer (5) und mindestens einen Inerter (6, 6') umfasst, wobei die mindestens eine Feder (4), der mindestens eine Dämpfer (5) und der mindestens eine Inerter (6, 6') einerseits jeweils mit dem Aufbau (3) und andererseits mit der Basis (2) verbunden sind, wobei der mindestens eine Inerter (6) eine Stelleinrichtung (SE) aufweist, wobei der mindestens eine Inerter (6) ein hydraulischer Inerter (6) mit mindestens einer Schwungradeinrichtung (12, 12') ist,
**dadurch gekennzeichnet, dass** die Schwungradeinrichtung (12, 12') ein Schwungrad (18, 18') mit einem variablen Trägheitsmoment aufweist, welches die Stelleinrichtung (SE) mit einem Stellmechanismus (23) bildet, der radial verstellbare Massenelemente aufweist.

2. Fahrzeug nach Anspruch 1, **dadurch gekennzeichnet, dass** in einer ersten Stellung der Stelleinrichtung (SE) ein erster Betriebszustand des Inerters (6) eingestellt ist, in welchem der Inerter (6) eine erste Massenträgheit aufweist, wobei in einer zweiten Stellung der Stelleinrichtung (SE) ein zweiter Betriebszustand des Inerters (6) eingestellt ist, in welchem der Inerter (6) eine zweite Massenträgheit aufweist, die sich von der ersten Massenträgheit unterscheidet.

3. Fahrzeug nach Anspruch 1 oder 2, **dadurch gekennzeichnet, dass** die Stelleinrichtung (SE) mehr als zwei Stellungen aufweist, welche mehr als zwei Betriebszuständen des Inerters (6) mit unterschiedlichen Massenträgheiten entsprechen.

4. Fahrzeug nach Anspruch 3, **dadurch gekennzeichnet, dass** die Stelleinrichtung (SE) zwischen zwei Stellungen stufenweise Zwischenstellungen oder eine stufenlose Verstellung aufweist.

5. Fahrzeug nach einem der vorstehenden Ansprüche,
**dadurch gekennzeichnet, dass** die Stelleinrichtung (SE) mindestens einen Bypass (19, 19') mit einem Stellorgan (20, 20') aufweist, wobei der mindestens eine Bypass (19, 19') die mindestens eine Schwungradeinrichtung (12, 12') in einer Stellung des Stellorgans (20, 20') überbrückt und in einer anderen Stellung des Stellorgans (20, 20') verschlossen ist.

6. Fahrzeug nach Anspruch 5, **dadurch gekennzeichnet, dass** das Stellorgan (20, 20') des mindestens einen Bypasses (19, 19') einen geschlossenen Zustand und einen offenen Zustand aufweist oder einen stufenweisen oder stufenlosen Übergang von dem geschlossenen Zustand in den offenen Zustand und zurück aufweist.

7. Fahrzeug nach einem der vorstehenden Ansprüche, **dadurch gekennzeichnet, dass** der Inerter (6) mindestens einen Elektromotor (21) als Stelleinrichtung (SE) aufweist, welcher mit einem Schwungrad (18, 18') der mindestens einen Schwungradeinrichtung (12, 12') direkt oder indirekt gekoppelt ist.

8. Fahrzeug nach einem der vorstehenden Ansprüche, **dadurch gekennzeichnet, dass** der mindestens eine Inerter (6) parallel zu der mindestens einen Feder (4) und zu dem mindestens einen Dämpfer (5) angeordnet ist.

9. Fahrzeug nach einem der vorstehenden Ansprüche, **dadurch gekennzeichnet, dass** der mindestens eine Inerter (6) die Funktion des mindestens einen Dämpfers (5) integriert aufweist.

10. Fahrzeug nach einem der vorstehenden Ansprüche, **dadurch gekennzeichnet, dass** die mindestens eine Feder (4) eine nicht einstellbare Feder ist.

11. Verfahren zum Bereitstellen eines Fahrzeugs, insbesondere eines Nutzfahrzeugs, nach einem der Ansprüche 1 bis 10 und zum Steuern der Federungsanordnung (1) für das Fahrzeug, wobei das Verfahren die folgenden Verfahrensschritte aufweist:

VS1)Bereitstellen der Federanordnung (1) mit mindestens einer Feder (4), mindestens einem Dämpfer (5) und mindestens einem hydraulischen Inerter (6) mit mindestens einer Schwungradeinrichtung (12, 12') mit einer Stelleinrichtung (SE), wobei sich der Inerter (6) in einem ersten Betriebszustand mit einer ersten Massenträgheit befindet, die an einen leeren Ladezustand des Fahrzeugs angepasst ist;

VS2)Verstellen des Inerters (6) mittels der Stelleinrichtung (SE) in einen zweiten Betriebszustand mit einer zweiten Massenträgheit, welche an eine Teilbeladung des Fahrzeugs angepasst ist; und

VS3)Verstellen des Inerters (6) mittels der Stelleinrichtung (SE) in einen dritten Betriebszustand mit einer dritten Massenträgheit, die an einen vollbeladenen Zustand des Fahrzeugs angepasst ist.

**12.** Verfahren nach Anspruch 11, **dadurch gekennzeichnet, dass** das Verstellen des Inerters (6) mittels der Stelleinrichtung (SE) von einem Betriebszustand in einen anderen in Stufen oder/und stufenlos durchgeführt wird.

**13.** Verfahren nach Anspruch 11 oder 12, **dadurch gekennzeichnet, dass** das Verstellen des Inerters (6) mittels der Stelleinrichtung (SE) in Form eines Elektromotors (21), der mit einer Schwungradeinrichtung (12, 12') des Inerters (6) gekoppelt ist, erfolgt.

**14.** Verfahren nach Anspruch 13, **dadurch gekennzeichnet, dass** der mit der Schwungradeinrichtung (12, 12') des Inerters (6) gekoppelte Elektromotor (21) ein Levelling der Federanordnung (1) durchführt.

**15.** Verfahren nach Anspruch 13 oder 14, **dadurch gekennzeichnet, dass** der mit der Schwungradeinrichtung (12, 12') des Inerters (6) gekoppelte Elektromotor (21) in einen Generatorbetrieb geschaltet wird und somit auch gleichzeitig zum Bedämpfen des Schwungrads (18) für eine Rekuperation von elektrischer Energie, ein Energy Harvesting und/oder eine optimale Einstellung der Dämpfung der Federanordnung (1) benutzt wird.

**16.** Verfahren nach einem der Ansprüche 11 oder 12, **dadurch gekennzeichnet, dass** das Verstellen des Inerters (6) durch Verändern eines Trägheitsmomentes des Schwungrads (18) der mindestens einen Schwungradeinrichtung (12, 12') mittels der Stelleinrichtung (SE) mit dem Stellmechanismus (23), der radial verstellbare Massenelemente aufweist, erfolgt.

## Claims

**1.** Vehicle, in particular a commercial vehicle, with a suspension arrangement (1, 1') for the vehicle, a base (2) and a body (3), wherein the suspension arrangement (1) comprises at least one spring (4), at least one damper (5) and at least one inerter (6, 6'), wherein the at least one spring (4), the at least one damper (5) and the at least one inerter (6, 6') are connected on the one hand to the body (3) and on the other hand to the base (2), wherein the at least one inerter (6) has an adjustment device (SE), wherein the at least one inerter (6) is a hydraulic inerter (6) with at least one flywheel unit (12, 12'),
**characterized in that** the flywheel unit (12, 12') has a flywheel (18, 18') with a variable moment of inertia, which forms the adjustment device (SE) with an adjustment mechanism (23) comprising radially adjustable mass elements.

**2.** Vehicle according to claim 1, **characterized in that** in a first position of the adjustment device (SE) a first operating state of the inerter (6) is set, in which the inerter (6) has a first inertia, wherein in a second position of the adjustment device (SE) a second operating state of the inerter (6) is set, in which the inerter (6) has a second inertia, which differs from the first inertia.

**3.** Vehicle according to claim 1 or 2, **characterized in that** the adjustment device (SE) has more than two positions which correspond to more than two operating states of the inerter (6) with different inertias.

**4.** Vehicle according to claim 3, **characterized in that** the adjustment device (SE) has stepwise intermediate positions or a stepless adjustment between two positions.

**5.** Vehicle according to any one of the preceding claims, **characterized in that** the adjustment device (SE) has at least one bypass (19, 19') with an actuator (20, 20'), wherein the at least one bypass (19, 19') bridges the at least one flywheel unit (12, 12') in one position of the actuator (20, 20') and is closed in another position of the actuator (20, 20').

6. Vehicle according to claim 5, **characterized in that** the actuator (20, 20') of the at least one bypass (19, 19') has a closed state and an open state or has a stepwise or stepless transition from the closed state to the open state and back.

7. Vehicle according to any one of the preceding claims, **characterized in that** the inerter (6) has at least one electric motor (21) as an adjustment device (SE), which is coupled directly or indirectly to a flywheel (18, 18') of the at least one flywheel unit (12, 12').

8. Vehicle according to any one of the preceding claims, **characterized in that** the at least one inerter (6) is arranged parallel to the at least one spring (4) and to the at least one damper (5).

9. Vehicle according to any one of the preceding claims, **characterized in that** the at least one inerter (6) has the function of the at least one damper (5) in an integrated manner.

10. Vehicle according to any one of the preceding claims, **characterized in that** the at least one spring (4) is a non-adjustable spring.

11. Method for providing a vehicle, in particular a commercial vehicle, according to any one of claims 1 to 10 and for controlling the suspension arrangement (1) for the vehicle, wherein the method includes the following method steps:

VS1) Providing the suspension arrangement (1) with at least one spring (4), at least one damper (5) and at least one hydraulic inerter (6) with at least one flywheel unit (12, 12') with an adjustment device (SE), wherein the inerter (6) is in a first operating state with a first inertia that is adapted to an empty load state of the vehicle;
VS2) Adjusting the inerter (6) by means of the adjustment device (SE) into a second operating state with a second inertia adapted to a partial load of the vehicle; and
VS3) Adjusting the inerter (6) by means of the adjustment device (SE) into a third operating state with a third inertia adapted to a fully loaded state of the vehicle.

12. Method according to claim 11, **characterized in that** the adjustment of the inerter (6) by means of the adjustment device (SE) from one operating state to another is carried out in steps or/and steplessly.

13. Method according to claim 11 or 12, **characterized in that** the adjustment of the inerter (6) is carried out by means of the adjustment device (SE) in the form of an electric motor (21) which is coupled to a flywheel unit (12, 12') of the inerter (6).

14. Method according to claim 13, **characterized in that** the electric motor (21) coupled to the flywheel unit (12, 12') of the inerter (6) performs a leveling of the suspension arrangement (1).

15. Method according to claim 13 or 14, **characterized in that** the electric motor (21) coupled to the flywheel unit (12, 12') of the inerter (6) is switched to generator mode and is thus also used simultaneously to damp the flywheel (18) for recuperation of electrical energy, energy harvesting and/or optimum adjustment of the damping of the spring arrangement (1).

16. Method according to any one of claims 11 to 12, **characterized in that** the adjustment of the inertia (6) is carried out by changing a moment of inertia of the flywheel (18) of the at least one flywheel unit (12, 12') by means of the adjustment device (SE) with the adjusting mechanism (23), which has radially adjustable mass elements.

## Revendications

1. Véhicule, en particulier véhicule utilitaire, avec un ensemble de suspension (1, 1') pour le véhicule, une base (2) et une structure (3), dans lequel l'ensemble de suspension (1) comprend au moins un ressort (4), au moins un amortisseur (5) et au moins un amortisseur d'inertie (6, 6'), dans lequel l'au moins un ressort (4), l'au moins un amortisseur (5) et l'au moins un amortisseur d'inertie (6, 6') d'une part sont reliés respectivement à la structure (3) et d'autre part à la base (2), dans lequel l'au moins un amortisseur d'inertie (6) présente un dispositif de réglage (SE), dans lequel l'au moins un amortisseur d'inertie (6) est un amortisseur d'inertie (6) hydraulique avec au moins un dispositif de volant (12, 12'), **caractérisé en ce que** le dispositif de volant (12, 12') présente un volant (18, 18') avec un moment d'inertie variable que forme le dispositif de réglage (SE) avec un mécanisme de réglage (23) qui présente des éléments de masse réglables radialement.

**2.** Véhicule selon la revendication 1, **caractérisé en ceque** dans une première position du dispositif de réglage (SE), un premier état de fonctionnement de l'amortisseur d'inertie (6) est réglé, dans lequel l'amortisseur d'inertie (6) présente une première inertie de masse, dans lequel dans une seconde position du dispositif de réglage (SE), un deuxième état de fonctionnement de l'amortisseur d'inertie (6) est réglé, dans lequel l'amortisseur d'inertie (6) présente une deuxième inertie de masse qui se distingue de la première inertie de masse.

**3.** Véhicule selon la revendication 1 ou 2, **caractérisé en ce que** le dispositif de réglage (SE) présente plus de deux positions qui correspondent qui correspondent à plus de deux états de fonctionnement de l'amortisseur d'inertie (6) avec différentes inerties de masse.

**4.** Véhicule selon la revendication 3, **caractérisé en ce que** le dispositif de réglage (SE) présente entre deux positions progressivement des positions intermédiaires ou un réglage continu.

**5.** Véhicule selon l'une quelconque des revendications précédentes, **caractérisé en ce que** le dispositif de réglage (SE) présente au moins une dérivation (19, 19') avec un organe de réglage (20, 20'), dans lequel l'au moins une dérivation (19, 19') ponte l'au moins un dispositif de volant (12, 12') dans une position de l'organe de réglage (20, 20') et est fermée dans une autre position de l'organe de réglage (20, 20').

**6.** Véhicule selon la revendication 5, **caractérisé en ce que** l'organe de réglage (20, 20') de l'au moins une dérivation (19, 19') présente un état fermé et un état ouvert ou une transition progressive ou continue de l'état fermé dans l'état ouvert et inversement.

**7.** Véhicule selon l'une quelconque des revendications précédentes, **caractérisé en ce que** l'amortisseur d'inertie (6) présente au moins un moteur électrique (21) comme dispositif de réglage (SE) qui est couplé directement ou indirectement à un volant (18, 18') de l'au moins un dispositif de volant (12, 12').

**8.** Véhicule selon l'une quelconque des revendications précédentes, **caractérisé en ce que** l'au moins un amortisseur d'inertie (6) est agencé parallèlement à l'au moins un ressort (4) et à l'au moins un amortisseur (5).

**9.** Véhicule selon l'une quelconque des revendications précédentes, **caractérisé en ce que** l'au moins un amortisseur d'inertie (6) présente de manière intégrée la fonction de l'au moins un amortisseur (5).

**10.** Véhicule selon l'une quelconque des revendications précédentes, **caractérisé en ce que** l'au moins un ressort (4) est un ressort non réglable.

**11.** Procédé de fourniture d'un véhicule, en particulier d'un véhicule utilitaire selon l'une quelconque des revendications 1 à 10 et de commande de l'ensemble de suspension (1) pour le véhicule, dans lequel le procédé présente les étapes de procédé suivantes :

VS1) la fourniture de l'ensemble de suspension (1) avec au moins un ressort (4), au moins un amortisseur (5) et au moins un amortisseur d'inertie (6) hydraulique avec au moins un dispositif de volant (12, 12') avec un dispositif de réglage (SE), dans lequel l'amortisseur d'inertie (6) se trouve dans un premier état de fonctionnement avec une première inertie de masse qui est adaptée à un état de charge vide du véhicule ;
VS2) le réglage de l'amortisseur d'inertie (6) au moyen du dispositif de réglage (SE) dans un deuxième état de fonctionnement avec une deuxième inertie de masse qui est adaptée à une charge partielle du véhicule ; et
VS3) le réglage de l'amortisseur d'inertie (6) au moyen du dispositif de réglage (SE) dans un troisième état de fonctionnement avec une troisième inertie de masse qui est adaptée à un état complètement chargé du véhicule.

**12.** Procédé selon la revendication 11, **caractérisé en ce que** le réglage de l'amortisseur d'inertie (6) est réalisé au moyen du dispositif de réglage (SE) d'un état de fonctionnement dans un autre par étapes et/ou en continu.

**13.** Procédé selon la revendication 11 ou 12, **caractérisé en ce que** le réglage de l'amortisseur d'inertie (6) est effectué au moyen du dispositif de réglage (SE) sous la forme d'un moteur électrique (21) qui est couplé à un dispositif de volant (12, 12') de l'amortisseur d'inertie (6).

**14.** Procédé selon la revendication 13, **caractérisé en ce que** le moteur électrique (21) couplé au dispositif de volant (12, 12') de l'amortisseur d'inertie (6) réalise une mise à niveau de l'ensemble de suspension (1).

**15.** Procédé selon la revendication 13 ou 14, **caractérisé en ce que** le moteur électrique (21) couplé au dispositif de volant (12, 12') de l'amortisseur d'inertie (6) est commuté dans un mode de générateur et est ainsi utilisé aussi simultanément pour l'amortissement du volant (18) pour une récupération d'énergie électrique, une collecte d'énergie et/ou un réglage optimal de l'amortissement de l'ensemble de suspension (1).

**16.** Procédé selon l'une quelconque des revendications 11 ou 12, **caractérisé en ce que** le réglage de l'amortisseur d'inertie (6) est effectué par modification d'un moment d'inertie du volant (18) de l'au moins un dispositif de volant (12, 12') au moyen du dispositif de réglage (SE) avec le mécanisme de réglage (23) qui présente des éléments de masse réglables radialement.

# Fig. 1
## Stand der Technik

# Fig. 3

# Fig. 2
# Stand der Technik

Fig. 4

# Fig. 5

# Fig. 6

# Fig. 7

EP 4 433 314 B1

# Fig. 8

# Fig. 9

VS1

VS2

VS3

**IN DER BESCHREIBUNG AUFGEFÜHRTE DOKUMENTE**

**In der Beschreibung aufgeführte Patentdokumente**

- DE 3442622 C2
- US 20090139225 A1
- DE 102009002260 A1

**In der Beschreibung aufgeführte Nicht-Patentliteratur**

- **FU-CHENG WANG et al.** Inerter Nonlinearities and the Impact on Suspension Control. *American Control Conference*, 2008
- **DAVID J. WAGG**. *A review of the mechanical inerter: historical context, physical realisations and nonlinear applications,*, 24 February 2021